# EUROPÄISCHE PATENTSCHRIFT

(11) **EP 2 957 441 B1**
(45) Veröffentlichungstag und Bekanntmachung des Hinweises auf die Patenterteilung: **21.11.2018**
(21) Anmeldenummer: 15170198.4
(22) Anmeldetag: 02.06.2015
(51) Int. Cl.: B60G 17/052, B60G 17/056

(54) **LUFTFEDERUNGSEINRICHTUNG ZUM HEBEN UND SENKEN EINES FAHRZEUGAUFBAUS**
PNEUMATIC SUSPENSION UNIT FOR LIFTING AND LOWERING A VEHICLE STRUCTURE
INSTALLATION DE RESSORT PNEUMATIQUE DESTINÉE À LEVER ET À ABAISSER UNE CAISSE DE VÉHICULE

(30) Priorität: 18.06.2014 DE 102014108556
(43) Veröffentlichungstag der Anmeldung: 23.12.2015
(73) Patentinhaber: KNORR-BREMSE Systeme für Nutzfahrzeuge GmbH, 80809 München (DE)
(72) Erfinder: Kantor, Kornel, 6000 Kecskemét (HU); Toth, Janos, 6000 Kecskemét (HU); Toth, Tamas, 6000 Kecskemet (HU); Voith, Andras, 1183 Budapest (HU)

(56) Entgegenhaltungen:
- EP-A1- 2 070 741
- EP-A1- 2 263 892
- EP-A1- 2 540 536
- EP-A1- 2 540 537
- EP-A2- 0 435 587
- WO-A1-2011/076302
- WO-A2-91/06440
- DE-A1- 19 916 040
- DE-A1-102007 008 159
- DE-B4-102007 008 156
- ES-A1- 2 277 765
- FR-A1- 2 279 580

## Beschreibung

### GEBIET DER ERFINDUNG

Die Erfindung betrifft eine Luftfederungseinrichtung zum Heben und Senken des Fahrzeugaufbaus von luftgefederten Fahrzeugen mit Niveauregelung, mit mindestens einer Niveauregelventileinheit, mindestens einer Fahrzeugachse zugeordneten Luftfederbälgen, die von einem mittelbar damit pneumatisch verbunden Vorratsluftbehälter speisbar sind, sowie mit einer Steuerventileinrichtung zur manuellen Niveaueinstellung des Fahrzeugaufbaus nach Maßgabe einer Handsteuereinheit unter Umgehung der Niveauregelventileinheit, umfassend ein Handbetätigungselement und eine Ventileinheit, wobei die Steuerventileinrichtung mindestens ein Sperrventil zum Be- und Entlüften der Luftfederbälge über die Niveauregelventileinheit, mindestens ein Belüftungsventil und mindestens ein Entlüftungsventil zum Be- und Entlüften der Luftfederbälge unter Umgehung der Niveauregelventileinheit aufweist.

Dabei kann die Luftfederungseinrichtung entweder ein-, zwei- oder quasi-zweikreisig ausgebildet sein.

### HINTERGRUND DER ERFINDUNG

Bei Luftfederungseinrichtungen mit Luftfederbälgen ist zusätzlich zum Niveauregelventil, welches das Niveau einer LKW- bzw. Anhängerplattform oder eines LKW- bzw. Anhängerrahmens in bekannter Weise auf einen konstanten Wert einregelt, eine manuell betätigbare Niveauregelventileinheit - oder auch Steuerventileinrichtung genannt - vorgesehen, mittels der von einer Bedienperson manuell und unter Umgehung des Niveauregelventils eine gewünschte Niveaulage der Anhängerplattform bzw. des Fahrzeugsaufbaus eingestellt werden kann. Dazu wird die Niveauregelventileinheit manuell in die Stellungen "Heben", "Senken" oder "Stop" gestellt. Dazu weist die Niveauregelventileinheit Handbetätigungsmittel auf, womit z. B. eine für ein Beladen des Fahrzeugs an einer Laderampe gewünschte Niveaulage eingestellt werden kann. Weiterhin muss eine Stellung "Fahrt" vorhanden sein, in welcher das Niveauregelventil wieder wirksam wird.

Es sind zahlreiche Lösungen von Luftfederungseinrichtungen mit Handbetätigungsmittel bekannt, bei denen die zuvor genannten vier Stellungen einstellbar sind.

Aus der DE10 2006 006 439 A1geht eine Verteilereinrichtung zur manuellen Veränderung der Niveaulage eines luftgefederten Fahrzeugs hervor. Die Ventileinrichtung weist ein Schiebeventil auf, das die Hebe- Senk- und Stop-Positionen durch Betätigung eines Handhebels realisiert und die Rückstellung des Handhebels in die Fahrt-Position durch Aufbringen einer Drehfederkraft verwirklicht. Nachteilig ist, dass die Kraft zur Betätigung des Handhebels sehr hoch ist, wodurch eine präzise Einstellung der Fahrzeughöhe erschwert wird.

Aus der DE 10 2006 017 890 B4 ist ein manuell betätigbares pneumatisches Steuerventil bekannt, bei dem die Sperr-, Be- und Entlüftungsventile als Sitzventile ausgebildet sind und direkt mechanisch angesteuert werden. Ein Nachteil ist, dass die dargestellten Großquerschnitt-Sitzventile, die zum schnellen Heben und Senken des Fahrzeugaufbaus benötigt werden, zu großen Abmessungen und hohem Gewicht der gesamten Vorrichtung führen.

Darüber hinaus geht aus der EP 2 263 892 A1 eine Schaltventileinheit zum Be- und Entlüften von Federbälgen hervor. Dabei ist die Betätigung von Sperr-, Be- und Entlüftungsventilen direkt mechanisch durch Handkraft, aber auch elektropneumatisch möglich. Nachteilig ist, dass bei abgekoppelten Anhängerfahrzeugen keine Elektrizitätsversorgung zur Verfügung steht und somit nur die direkte mechanische Betätigung mit den zuvor genannten Nachteilen möglich ist.

Des Weiteren geht aus der DE 10 2007 008 156 B4 eine Luftfederungseinrichtung hervor, die eine Niveauregelventileinheit - oder auch Steuerventileinrichtung genannt - aufweist. Die Niveauregelventileinheit steht mit einem Niveauregelventil, einer Steuereinheit und einer Handsteuereinheit in pneumatischer Verbindung, um Druckluft in oder aus Luftfederbälgen zum Heben und Senken einer Anhängerplattform zu speisen. Als Druckquelle dient ein Vorratsluftbehälter. Gemäß einem ersten Ausfuhrungsbeispiel weist die Luftfedereinrichtung zwei Handbetätigungsmittel zum manuellen Ansteuern von pneumatisch betätigbaren Steuerventilen zum Be- und Entlüften der Luftfederbälge unter Umgehung des Niveauregelventils auf. Dabei können jedoch nur die Betriebszustände Heben, Senken und Parken realisiert werden. Der Betriebszustand Fahrt stellt sich selbsttätig über die Steuereinheit ein, sobald eine bestimmte Fahrgeschwindigkeit überschritten wird. Zur manuellen Einstellung des Betriebszustandes Fahrt ist gemäß einem weiteren Ausführungsbeispiel ein drittes Handbetätigungsmittel an der Handsteuereinheit vorgesehen. Dabei weist jedes Handbetätigungsmittel ein Ventilelement auf, das über eine jeweilige pneumatische Leitung mit dem Niveauregelventil in Verbindung steht und die Funktion Höhenbegrenzung auch bei manueller Höheneinstellung verwirklicht. Durch die Anzahl an Handbetätigungsmittel wird die Bedienfreundlichkeit gemindert. Ferner ist aufgrund der Anzahl an Ventilelementen und pneumatischen Leitungen, welche aus der Anzahl an Handbetätigungsmittel resultieren, der pneumatische Schaltkreis komplexer aufgebaut.

Die ES 2 277 785 A1 offenbart eine gattungsgemäße Luftfederungseinrichtung, die eine Steuerventileinrichtung zur manuellen Niveaueinstellung des Fahrzeugaufbaus nach Maßgabe einer Handsteuereinheit unter Umgehung der ansonsten agierenden automatischen Niveauregelventileinheit vorsieht. Die entsprechende Ventiltechnik ist einerseits in einem Niveauregelmodul im Zentrum des Fahrzeugunterbaus und andererseits in einem Handbetätigungsmodul am Rand des Fahrzeugs - und damit in greifbarer Nähe zum Bediener - angeordnet. Über einen Mehrfachverteiler erfolgt eine Verrohrung der Module. Durch diese Verrohrung besteht hier ein erhöhter Montageaufwand und die Verrohrung ist nicht sicher vor mechanischen Beschädigungen, beispielsweise durch Steinschlag.

Die DE 10 2007 008 156 B4 offenbart eine andere Luftfederungseinrichtung mit demselben Funktionsumfang, bei welcher eine Handsteuereinheit mit verschiedenen Betätigungsknöpfen zur manuellen Einstellung von verschiedenen Betriebszuständen der Luftfederungseinrichtung ebenfalls in einem eigenen Modul angeordnet ist. Die Luftfederbälge sind in Parallelschaltung ausgangsseitig der Steuerventileinrichtung angeschlossen. Eine Niveauregeleinheit ist ebenfalls als eigene Baueinheit ausgebildet. Die verschiedenen Komponenten des Systems müssen miteinander verbunden werden.

Die WO 2011/076302 A1 offenbart eine andere technische Lösung, bei welcher eine Steuerventileinrichtung zur manuellen Niveaueinstellung des Fahrzeugaufbaus neben einer automatischen Niveauregelventileinheit vorgesehen ist.

### OFFENBARUNG DER ERFINDUNG

Es ist daher die Aufgabe der vorliegenden Erfindung eine Luftfederungseinrichtung zum manuellen Heben und Senken eines Fahrzeugaufbaus von luftgefederten Fahrzeugen mit Niveauregelung dahingehend weiterzuentwickeln, dass sowohl der pneumatische Schaltkreis vereinfacht wird als auch die Bedienfreundlichkeit mit besonderer Hinsicht auf eine feine und präzise Höheneinstellung erhöht wird.

Die Aufgabe wird ausgehend von einer Luftfederungseinrichtung gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß steuert die Handsteuereinheit durch eine Position des Handbetätigungselements das mindestens eine Sperrventil, das mindestens eine Belüftungsventil und das mindestens eine Entlüftungsventil über jeweils eine damit verbundene pneumatische Leitung zur Einleitung eines von vier Betriebszuständen der Luftfederungseinrichtung pneumatisch an. Mit anderen Worten nimmt die Position des einzigen Handbetätigungselements direkt Einfluss auf die Ventileinheit und verbindet somit die pneumatische Leitung, welche Druckluft vom Vorratsluftbehälter und/oder von den Luftfederbälgen führt, über die Ventileinheit mit der jeweiligen pneumatischen Leitung des jeweiligen Ventils. Das mindestens eine Sperrventil, das mindestens eine Belüftungsventil und das mindestens eine Entlüftungsventil sind allesamt pneumatisch ansteuerbar und als 2/2-Wegeventile ausgebildet, wobei die zuvor genannten Ventile schließen oder geschlossen bleiben, wenn der Steuerdruck des jeweiligen Ventils gleich oder größer ist als die Druckwerte auf den Arbeitsanschlüssen Eingang und Ausgang des jeweiligen Ventils. Die Handsteuereinheit steuert das mindestens eine Sperrventil, das mindestens eine Belüftungsventil und das mindestens eine Entlüftungsventil in allen vier Positionen an.

Es wird vorgeschlagen, dass eine Vorratsleitung einerseits mit dem Vorratsbehälter, andererseits mit den Luftfederbälgen durch je ein Rückschlagventil in Verbindung steht. Die Vorratsleitung steht somit über ein erstes Rückschlagventil mit dem Vorratsluftbehälter und über das zweite Rückschlagventil mit den Luftfederbälgen in Verbindung, wobei der Druck in Vorratsleitung der stets dem höheren Druck zwischen Vorratsluftbehälter und Luftfederbälgen entsprich. Die Be- und Entlüftungsventile bleiben nämlich geschlossen auch wenn der Druck im Vorratsluftbehälter nicht ausreichend hoch ist. Dies dient als Sicherheitsmaßnahme.

Mithin entsteht der Druck in der Vorratsleitung aus den Druck im Vorratsbehälter und/oder aus dem Druck in den Luftbälgen, wobei durch die zwei Rückschlagventile, immer der höhere Druck entnommen. Dieser Druck wird dann als Steuerdruck von der Ventileinheit ausgesteuert.

Gemäß einem bevorzugten Ausführungsbeispiel weist die Steuerventileinrichtung für eine einkreisige Luftfederungseinrichtung das Sperrventil, das Belüftungsventil und mindestens ein Entlüftungsventil auf. Dabei ist funktionell ein Entlüftungsventil ausreichend. Zwei Entlüftungsventile sind vorteilhaft, wenn ein schnelles Senken erwünscht ist. Einkreisig bedeutet in diesem Zusammenhang, dass die Luftfederbälge einem Kreis zugeordnet sind und deshalb nur gemeinsam be- und entlüftet werden können.

Gemäß einem weiteren bevorzugten Ausführungsbeispiel weist die Steuerventileinrichtung für eine zweikreisige oder quasi-zweikreisige Luftfederungseinrichtung zwei Sperrventile, zwei Belüftungsventile und zwei Entlüftungsventile auf. Zweikreisig bedeutet, dass die linksseitigen und die rechtsseitigen Luftfederbälge getrennt voneinander be- bzw. entlüftbar sind. Quasi-zweikreisig bedeutet, dass die Luftfederbälge der beiden Seiten des Fahrzeuges separat be- und entlüftbar sind, aber durch eine enge Drosselung der Luftströmung zusammengebunden sind. Je nachdem ob die Luftfederungseinrichtung ein- oder zweikreisig bzw. quasi-zweikreisig ausgebildet ist, variiert insbesondere die Anzahl der Sperrventile, Belüftungsventile und Entlüftungsventile.

Vorzugsweise leitet eine erste Position des Handbetätigungselements einen Betriebszustand Parken ein, wobei die Handsteuereinheit die Vorratsleitung über die Ventileinheit mit dem mindestens einen Sperrventil sowie mit dem mindestens einen Belüftungsventil und mit dem mindestens einen Entlüftungsventil über die jeweilige pneumatische Leitung verbindet. Somit sind die jeweiligen pneumatischen Leitungen mit Druckluft belastet, wodurch das mindestens eine Sperrventil, das mindestens eine Belüftungsventil und das mindestens eine Entlüftungsventil geschlossen sind.

Des Weiteren bevorzugt leitet eine zweite Position des Handbetätigungselements einen Betriebszustand Fahren ein, wobei die Handsteuereinheit die Vorratsleitung über die Ventileinheit mit dem mindestens einen Belüftungsventil und dem mindestens einen Entlüftungsventil über die jeweilige pneumatische Leitung verbindet und die pneumatische Leitung des mindestens einen Sperrventils entlüftet. Das Entlüften der pneumatischen Leitung des mindestens einen Sperrventils schaltet das mindestens eine Sperrventil von der geschlossenen Position auf eine Durchflussposition um, wodurch die Niveauregelventileinheit mit den Luftfederbälgen pneumatisch verbunden wird. Mithin erfolgt ein Senken oder Heben des Fahrzeugaufbaus automatisch nach Maßgabe der Niveauregelventileinheit.
Besonders bevorzugt ist, dass eine dritte Position des Handbetätigungselements einen Betriebszustand Senken einleitet, wobei die die Vorratsleitung über die Ventileinheit mit dem mindestens einen Sperrventil und dem mindestens einen Belüftungsventil über die jeweilige pneumatische Leitung verbindet und die pneumatische Leitung des mindestens einen Entlüftungsventils entlüftet. Das Entlüften der pneumatischen Leitung des mindestens einen Entlüftungsventils schaltet das mindestens eine Entlüftungsventil von der geschlossenen Position auf eine Entlüftungsposition um, wodurch die Luftfederbälge mit der Atmosphäre pneumatisch verbunden werden. Mithin wird der Fahrzeugaufbau durch Betätigung des Handbetätigungselements unter Umgehung der Niveauregelventileinheit manuell gesenkt.

Die Erfindung schließt die technische Lehre ein, dass eine vierte Position des Handbetätigungselements einen Betriebszustand Heben einleitet, wobei die Handsteuereinheit die Vorratsleitung über die Ventileinheit mit dem mindestens einen Sperrventil und dem mindestens einen Entlüftungsventil über die jeweilige pneumatische Leitung verbindet und die pneumatische Leitung des mindestens einen Belüftungsventils entlüftet. Das Entlüften der pneumatischen Leitung des mindestens einen Belüftungsventils schaltet das mindestens eine Belüftungsventil von der geschlossenen Position auf eine Belüftungsposition um, wodurch die Luftfederbälge mit der Vorratsleitung pneumatisch verbunden werden. Mithin wird der Fahrzeugaufbau durch Betätigung des Handbetätigungselements unter Umgehung der Niveauregelventileinheit manuell gehoben.

Gemäß der Erfindung ist eine Luftverteilungseinheit fluidtechnisch zwischen der Steuerventileinrichtung und den Luftfederbälgen geschaltet und ein achslastabhängiges pneumatisches Steuersignal generiert. Das Steuersignal wird über einen Steueranschluss weitergeleitet und dient als der Achslast proportionales Luftfederdruck-Signal für eine EBS-Einheit zur lastabhängigen Bremskraftregelung. Ferner gibt es keine Rückwirkung von der EBS auf die Steuerventileinrichtung. Erfindungsgemäß sind die Steuerventileinrichtung zusammen mit der Luftverteilungseinheit und der Handsteuereinheit in einem gemeinsamen Gehäuse angeordnet. Das gemeinsame Gehäuse erlaubt einen kompakten Aufbau und verkürzt die zwischen der Steuerventileinrichtung, der Luftverteilungseinheit und der Handsteuereinheit angeordneten pneumatischen Leitungen. Ferner wird dadurch ermöglicht die pneumatischen Leitungen in Form von inneren Kanälen anstatt von Rohrverbindung auszubilden.

### KURZE BESCHREIBUNG DER ZEICHNUNGEN

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
Fig.1 ein schematisches Schaltbild einer erfindungsgemäßen quasi-zweikreisigen Luftfederungseinrichtung im Betriebszustand Parken,
Fig.2 ein schematisches Schaltbild der erfindungsgemäßen quasi-zweikreisigen Luftfederungseinrichtung aus Figur 1 im Betriebszustand Fahren.

### DETAILLIERTE BESCHREIBUNG EINER BEVORZUGTEN AUSFÜHRUNGSFORM

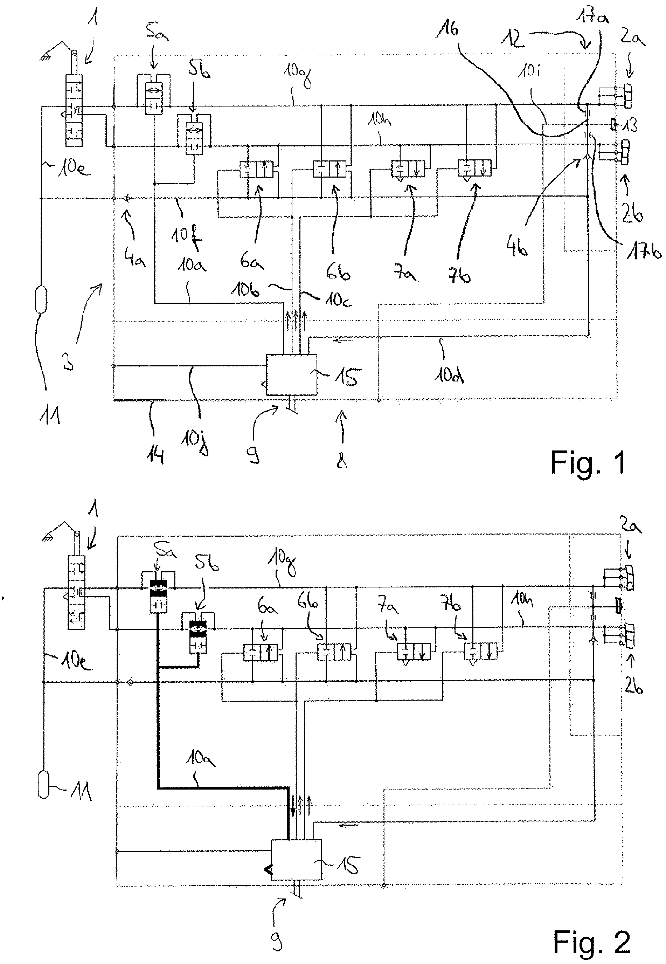

Gemäß Figur 1 weist die quasi-zweikreisige Luftfederungseinrichtung einen Vorratsluftbehälter 11 auf, der über eine pneumatische Leitung 10e mit einer Niveauregelventileinheit 1 pneumatisch verbunden ist. Eine Steuerventileinrichtung 3, umfassend zwei Sperrventile 5a, 5b, zwei Belüftungsventile 6a, 6b und zwei Entlüftungsventile 7a, 7b, ist der Niveauregelventileinheit 1 pneumatisch nachgeschaltet. Über eine an die Steuerventileinrichtung 3 angeordnete Luftverteilungseinheit 12 sind Luftfederbälge 2a, 2b, die an - hier nicht dargestellten - Fahrzeugachsen angeordnet sind, mittelbar über die Niveauregelventileinheit 1 und die Steuerventileinrichtung 3 mit dem Vorratsluftbehälter 11 pneumatisch verbunden. Zweikreisig bedeutet, dass die linksseitigen und die rechtsseitigen Luftfederbälge 2a, 2b vollkommen getrennt voneinander be- bzw. entlüftbar sind.

Die Steuerventileinrichtung 3 ist zur manuellen Niveaueinstellung des Fahrzeugaufbaus unter Umgehung der Niveauregelventileinheit 1 mit einer Handsteuereinheit 8, umfassend ein einziges Handbetätigungselement 9 und eine Ventileinheit 15, pneumatisch verbunden. Dazu sind pneumatische Leitungen 10a, 10b, 10c zwischen der Steuerventileinrichtung 3 und der Handsteuereinheit 8 ausgebildet, welche die Ventileinheit 15 mit jeweils den zwei Sperrventile 5a, 5b, jeweils den zwei Belüftungsventilen 6a, 6b und jeweils den zwei Entlüftungsventile 7a, 7b pneumatisch verbindet. Eine pneumatische Leitung 10d dient der Ventileinheit 15 als pneumatischer Eingang und verbindet diese mittelbar mit dem Vorratsluftbehälter 11 und/oder mit den Luftfederbälgen 2a, 2b durch die Rückschlagventile 4a, 4b. Die Steuerventileinrichtung 3 ist vorteilhafterweise zusammen mit der Luftverteilungseinheit 12 und der Handsteuereinheit 8 in einem gemeinsamen Gehäuse 14 angeordnet.
In dem dargestellten Betriebszustand Parken befindet sich das Handbetätigungselement 9 in einer ersten Position, so dass die zwei Sperrventile 5a, 5b, die zwei Belüftungsventilen 6a, 6b und die zwei Entlüftungsventile 7a, 7b, welche alle als 2/2-Wegeventile ausgebildet sind, aufgrund eines pneumatischen Druckes in den pneumatischen Leitungen 10a, 10b, 10c geschlossen sind. Aufgrund der beiden geschlossenen Sperrventile 5a, 5b kann weder über die pneumatische Leitung 10g noch über die pneumatische Leitung 10h Druckluft aus dem Vorratsluftbehälter 11 über die Niveauregelventileinheit 1 in die Luftfederbälge 2a, 2b strömen, unabhängig von der Schaltposition des Niveauregelventils 1. Ferner strömt auch über die zwei Belüftungsventilen 6a, 6b und die zwei Entlüftungsventile 7a, 7b weder Druckluft in die Luftfederbälge 2a, 2b hinein noch Druckluft aus den Luftfederbälgen 2a, 2b heraus. Somit wird das eingestellte Niveau des Fahrzeugaufbaus nicht verändert.

Die Luftverteilungseinheit 12 umfasst eine Verbindungsleitung 16, welche die rechts- und linksseitige Luftfederbälge 2a, 2b durch zwei Drosseln 17a, 17b verbindet. Zwischen den zwei Drosseln 17a, 17b bildet sich aus den Druckwerten in den rechts- und linksseitigen Luftfederbälgen 2a, 2b ein Druckmittelwert. Dieser Druckmittelwert wird einerseits durch den Steueranschluss 13 zu dem Bremssystem des Fahrzeuges EBS oder zu dem Bremssystem des Anhängers TEBS geleitet und dient als Achslastsignal. Andererseits wird es durch die Leitung 10i zu einem Testanschluss geleitet.

Die Handsteuereinheit 8 umfasst eine Verbindungsleitung 10j, wodurch ein von dem Fahrzustand abhängiges Signal eingeleitet wird, um die Ventileinheit 15 ohne manueller Eingriff in die zweite Position zu schalten.

Nach Figur 2 befindet sich das Handbetätigungselement 9 in einer zweiten Position, wodurch die zwei Sperrventile 5a, 5b, aufgrund einer Entlüftung der pneumatischen Leitung 10a über die Ventileinheit 15, geöffnet sind. Die zwei Belüftungsventile 6a, 6b und die zwei Entlüftungsventile 7a, 7b sind geschlossen. Mit anderen Worten wird in diesem Betriebszustand Fahren ein Durchströmen der Druckluft über die zwei Sperrventile 5a, 5b aus dem Vorratsluftbehälter 11 in die Druckluftbälge 2a, 2b ermöglicht. Jedoch befindet sich die zwischen den Sperrventilen 5a, 5b und dem Vorratsluftbehälter 11 angeordnete Niveauregelventileinheit 1 in der Position Geschlossen, so dass weder Druckluft in die Druckluftbälge 2a, 2b ein- noch ausströmen kann. Die Position der Niveauregelventileinheit 1 ist jedoch variabel und ändert sich mit der Fahrzeughöhe selbsttätig, wobei ferner über die Niveauregelventileinheit 1 eine pneumatische Verbindung zwischen der pneumatischen Leitung 10e und den pneumatischen Leitungen 10g und 10h zum Heben des Fahrzeugaufbaus, d.h. eine automatische Rückstellung auf eine vorbestimmte Fahrzeughöhe, realisierbar ist.

Gemäß einem nicht dargestellten Beispiel befindet sich das Handbetätigungselement 9 in einer dritten Position, wodurch die zwei Entlüftungsventile 7a, 7b, aufgrund einer Entlüftung der pneumatischen Leitung 10c über die Ventileinheit 15, geöffnet sind. Die zwei Belüftungsventile 6a, 6b und die zwei Sperrventile 5a, 5b sind geschlossen. Mit anderen Worten wird in diesem Betriebszustand Senken ein Herausströmen der Druckluft über die zwei Entlüftungsventile 7a, 7b aus den Luftfederbälgen 2a, 2b ermöglicht, so dass der Fahrzeugaufbau manuell unter Umgehung der Niveauregelventileinheit 1 gesenkt wird.

Gemäß einem nicht dargestellten Beispiel befindet sich das Handbetätigungselement 9 in einer vierten Position, wodurch die zwei Belüftungsventile 6a, 6b, aufgrund einer Entlüftung der pneumatischen Leitung 10b über die Ventileinheit 15, geöffnet sind. Die zwei Entlüftungsventile 7a, 7b und die zwei Sperrventile 5a, 5b sind geschlossen. Mit anderen Worten wird in diesem Betriebszustand Heben ein Hineinströmen der Druckluft über die zwei Belüftungsventile 6a, 6b in die Luftfederbälge 2a, 2b ermöglicht, so dass der Fahrzeugaufbau manuell unter Umgehung der Niveauregelventileinheit 1 gehoben wird.

Die in einem nicht dargestellten Beispiel einkreisige Luftfederungseinrichtung weist eine Steuerventileinrichtung 3, umfassend das Sperrventil 5a, das Belüftungsventile 6a und die Entlüftungsventile 7a, 7b auf. Einkreisig bedeutet in diesem Zusammenhang, dass die Luftfederbälge 2a, 2b einem Kreis zugeordnet sind und deshalb nur gemeinsam be- und entlüftet werden können. Daher ist zwischen der Niveauregelventileinheit 1 und den Luftfederbälgen 2a, 2b nur eine pneumatische Leitung 10g angeordnet. In dem dargestellten Betriebszustand Parken befindet sich das einzige Handbetätigungselement 9 in einer ersten Position, so dass das Sperrventil 5a, das Belüftungsventil 6a und die Entlüftungsventile 7a, 7b, welche alle als 2/2-Wegeventile ausgebildet sind, aufgrund eines pneumatischen Druckes in den pneumatischen Leitungen 10a, 10b, 10c geschlossen sind. Die zwei Entlüftungsventile 7a, 7b sind zur schnellen Entlüftung der Luftfederbälge 2a, 2b und somit zum schnellen Senkel des Fahrzeugs vorgesehen.

### Bezugszeichenliste

- 1: Niveauregelventileinheit
- 2a, 2b: Luftfederbälge
- 3: Steuerventileinrichtung
- 4a, 4b: Rückschlagventil
- 5a, 5b: Sperrventil
- 6a, 6b: Belüftungsventil
- 7a, 7b: Entlüftungsventil
- 8: Handsteuereinheit
- 9: Handbetätigungselement
- 10a-10j: pneumatische Leitung
- 11: Vorratsluftbehälter
- 12: Luftverteilungseinheit
- 13: Steuereinheit
- 14: Gehäuse
- 15: Ventil einheit
- 16: Verbindungsleitung
- 17a, 17b: Drossel

## Patentansprüche

1. Luftfederungseinrichtung zum Heben und Senken des Fahrzeugaufbaus von luftgefederten Fahrzeugen mit Niveauregelung, mit mindestens einer Niveauregelventileinheit (1), mindestens einer Fahrzeugachse zugeordneten Luftfederbälgen (2a, 2b), die von einem mittelbar damit pneumatisch verbunden Vorratsluftbehälter (11) speisbar sind, sowie mit einer Steuerventileinrichtung (3) zur manuellen Niveaueinstellung des Fahrzeugaufbaus nach Maßgabe einer Handsteuereinheit (8) unter Umgehung der Niveauregelventileinheit (1), umfassend ein Handbetätigungselement (9) und eine Ventileinheit (15), wobei die Steuerventileinrichtung (3) mindestens ein Sperrventil (5a) zum Be- und Entlüften der Luftfederbälge (2a, 2b) über die Niveauregelventileinheit (1), mindestens ein Belüftungsventil (6a) und mindestens ein Entlüftungsventil (7a) zum Be- und Entlüften der Luftfederbälge (2a, 2b) unter Umgehung der Niveauregelventileinheit (1) aufweist, wobei die Handsteuereinheit (8) durch eine Position des Handbetätigungselements (9) das mindestens eine Sperrventil (5a), das mindestens eine Belüftungsventil (6a) und das mindestens eine Entlüftungsventil (7a) über jeweils eine damit verbundene pneumatische Leitung (10a, 10b, 10c) zur Einleitung eines von vier Betriebszuständen der Luftfederungseinrichtung pneumatisch ansteuert,
**dadurch gekennzeichnet, dass** eine ein achslastabhängiges Steuersignal generierende Luftverteilungseinheit (12) fluidtechnisch zwischen der Steuerventileinrichtung (3) und den Luftfederbälgen (2a, 2b) geschaltet ist, und
dass die Steuerventileinrichtung (3) zusammen mit der Luftverteilungseinheit (12) und der Handsteuereinheit (8) in einem gemeinsamen Gehäuse (14) angeordnet sind.

2. Luftfederungseinrichtung nach Anspruch 1,
**dadurch gekennzeichnet, dass** eine Vorratsleitung (10f) einerseits mit dem Vorratsluftbehälter (11), andererseits mit den Luftfederbälgen (2a, 2b) durch je ein Rückschlagventil (4a, 4b) in Verbindung steht.

3. Luftfederungseinrichtung nach Anspruch 1 oder 2,
**dadurch gekennzeichnet, dass** eine erste Position des Handbetätigungselements (9) einen Betriebszustand Parken einleitet, wobei die Handsteuereinheit (8) eine mit dem Vorratsluftbehälter (11) pneumatisch verbundene Vorratsleitung (10f) über die Ventileinheit (15) mit dem mindestens einen Sperrventil (5a) sowie mit dem mindestens einen Belüftungsventil (6a) und mit dem mindestens einen Entlüftungsventil (7a) über die jeweilige pneumatische Leitung (10a, 10b, 10c) verbindet.

4. Luftfederungseinrichtung nach Anspruch 1 oder 2,
**dadurch gekennzeichnet, dass** eine zweite Position des Handbetätigungselements (9) einen Betriebszustand Fahren einleitet, wobei die Handsteuereinheit (8) die Vorratsleitung (10f) über die Ventileinheit (15) mit dem mindestens einen Belüftungsventil (6a) und dem mindestens einen Entlüftungsventil (7a) über die jeweilige pneumatische Leitung (10b, 10c) verbindet und die pneumatische Leitung (10a) des mindestens einen Sperrventils (5a) entlüftet.

5. Luftfederungseinrichtung nach Anspruch 1 oder 2,
**dadurch gekennzeichnet, dass** eine dritte Position des Handbetätigungselements (9) einen Betriebszustand Senken einleitet, wobei die Handsteuereinheit (8) die Vorratsleitung (10f) über die Ventileinheit (15) mit dem mindestens einen Sperrventil (5a) und dem mindestens einen Belüftungsventil (6a) über die jeweilige pneumatische Leitung (10a, 10b) verbindet und die pneumatische Leitung (10c) des mindestens einen Entlüftungsventils (7a) entlüftet.

6. Luftfederungseinrichtung nach Anspruch 1 oder 2,
**dadurch gekennzeichnet, dass** eine vierte Position des Handbetätigungselements (9) einen Betriebszustand Heben einleitet, wobei die Handsteuereinheit (8) die Vorratsleitung (10f) über die Ventileinheit (15) mit dem mindestens einen Sperrventil (5a) und dem mindestens einen Entlüftungsventil (7a) über die jeweilige pneumatische Leitung (10a, 10c) verbindet und die pneumatische Leitung (10b) des mindestens einen Belüftungsventils (6a) entlüftet.

7. Luftfederungseinrichtung nach Anspruch 1,
**dadurch gekennzeichnet, dass** die Steuerventileinrichtung (3) für eine einkreisige Luftfederungseinrichtung das Sperrventil (5a), das Belüftungsventil (6a) und mindestens ein Entlüftungsventil (7a) aufweist.

8. Luftfederungseinrichtung nach Anspruch 1,
**dadurch gekennzeichnet, dass** die Steuerventileinrichtung (3) für eine zweikreisige und/oder quasi-zweikreisige Luftfederungseinrichtung zwei Sperrventile (5a, 5b), zwei Belüftungsventile (6a, 6b) und zwei Entlüftungsventile (7a, 7b) aufweist.

## Claims

1. Pneumatic suspension unit for raising and lowering the vehicle body of airsprung vehicles with level regulation, having at least one level regulating valve unit (1), at least one pneumatic spring bellows (2a, 2b) associated with a vehicle axle that can be fed from an air supply container (11) indirectly pneumatically connected thereto, and with a control valve device (3) for the manual adjustment of the level of the vehicle body in accordance with a manual control unit (8) which bypasses the level regulating valve unit (1), comprising a manual actuating element (9) and a valve unit (15), wherein the control valve device (3) comprises at least one blocking valve (5a) for supplying air to and for venting the pneumatic spring bellows (2a, 2b) by way of the level regulating valve unit (1), at least one air supply valve (6a) and at least one air venting valve (7a) for supplying air to and for venting the pneumatic spring bellows (2a, 2b) while bypassing the level regulating valve unit (1), wherein by virtue of a position of the manual actuating element (9) the manual control unit (8) pneumatically controls the at least one blocking valve (5a), the at least one air supply valve (6a) and the at least one air venting valve (7a) in each case by means of a respective pneumatic line (10a, 10b, 10c) pneumatically connected thereto for producing one of four operating conditions of the pneumatic suspension unit, **characterised in that** an air distribution unit (12) that generates a control signal which depends on the axle load is fluidically connected between the control valve device (3) and the pneumatic spring bellows (2a, 2b), and
the control valve device (3), together with the air distribution unit (12) and the manual control unit (8) are accommodated in a common housing (14).

2. Pneumatic suspension unit according to Claim 1,
**characterised in that** an air supply line (10f) is connected on the one hand to the air supply container (11) and on the other hand to the pneumatic spring bellows (2a, 2b), in each case by way of a non-return valve (4a, 4b).

3. Pneumatic suspension unit according to Claims 1 or 2,
**characterised in that** a first position of the manual actuating element (9) produces a parking operating condition, wherein the manual control unit (8) connects an air supply line (10f) pneumatically connected to the air supply container (11) by way of the valve unit (15) with the at least one blocking valve (5a) and with the at least one air supply valve (6a) and with the at least one air venting valve (7a), via the respective pneumatic line (10a, 10b, 10c).

4. Pneumatic suspension unit according to Claims 1 or 2,
**characterised in that** a second position of the manual actuating element (9) produces a driving operating condition, wherein the manual control unit (8) connects the air supply line (10f) by way of the valve unit (15) with the at least one air supply valve (6a) and the at least one ait venting valve (7a) via the respective pneumatic line (10b, 10c) and vents the pneumatic line (10a) of the at least one blocking valve (5a).

5. Pneumatic suspension unit according to Claims 1 or 2,
**characterised in that** a third position of the manual actuating element (9) produces a lowering operating condition, wherein the manual control unit (8) connects the air supply line (10f) by way of the valve unit (15) with the at least one blocking valve (5a) and the at least one air supply valve (6a) via the respective pneumatic line (10a, 10b) and vents the pneumatic line (10c) of the at least one air venting valve (7a).

6. Pneumatic suspension unit according to Claims 1 or 2,
**characterised in that** a fourth position of the manual actuating element (9) produces a raising operating condition, wherein the manual control unit (8) connects the air supply line (10f) by way of the valve unit (15) with the at least one blocking valve (5a) and the at least one air venting valve (7a) via the respective pneumatic line (10a, 10c) and vents the pneumatic line (10b) of the at least one air supply valve (6a).

7. Pneumatic suspension unit according to Claim 1,
**characterised in that** the control valve device (3) for a single-circuit pneumatic suspension unit comprises the blocking valve (5a), the air supply valve (6a) and at least one air venting valve (7a).

8. Pneumatic suspension unit according to Claim 1,
**characterised in that** the control valve device (3) for a dual-circuit and/or quasi-dual-circuit pneumatic suspension unit comprises two blocking valves (5a, 5b), two air supply valves (6a, 6b) and two air venting valves (7a, 7b).

## Revendications

1. Dispositif de suspension pneumatique pour lever et abaisser la caisse d'un véhicule à suspension pneumatique, comprenant une régulation de niveau, ayant au moins une unité (1) de soupape de régulation de niveau, au moins des soufflets (2a, 2b) de ressort pneumatique associés à un essieu du véhicule, pouvant être alimentés par un réservoir (11) d'air y communiquant avec eux pneumatiquement de manière indirecte, ainsi qu'un dispositif (3) de soupape de commande pour le réglage manuel du niveau de la caisse du véhicule conformément à une unité (8) de commande manuelle en contournant l'unité (1) de soupape de régulation du niveau, comprenant un élément (9) d'actionnement manuel et une unité (15) de soupape, le dispositif (3) de soupape de commande ayant au moins un robinet (5a) d'arrêt pour alimenter les soufflets (2a, 2b) à ressort pneumatique en air et les purger par l'intermédiaire de l'unité (1) de soupape de régulation du niveau, au moins une soupape (6a) d'alimentation en air et au moins une soupape (7a) de purge pour l'alimentation en air et la purge des soufflets (2a, 2b) à ressort pneumatique en contournant l'unité (1) de soupape de régulation du niveau, l'unité (8) de commande pneumatique commandant pneumatiquement, par une position de l'élément (9) d'actionnement manuel, le au moins un robinet (5a) d'arrêt, la au moins une soupape (6a) d'alimentation en air et la au moins une soupape (7a) de purge par respectivement un conduit (10a, 10b, 10c) pneumatique qui est relié à eux pour l'établissement de l'un de quatre états de fonctionnement du dispositif de suspension pneumatique, **caractérisé en ce qu'**une unité (12) de répartition d'air produisant un signal de commande en fonction de la charge de l'essieu est montée en technique des fluides entre le dispositif (3) de soupape de commande et les soufflets (2a, 2b) à ressort pneumatique, et
**en ce que** le dispositif (3) de soupape de commande est disposé, ensemble avec l'unité (12) de répartition de l'air et l'unité (8) de commande manuelle, dans une enveloppe (14) commune.

2. Dispositif de suspension pneumatique suivant la revendication 1,
**caractérisé en ce qu'**un conduit (10f) de réserve est en liaison, d'une part, avec le réservoir (11) et, d'autre part, avec les soufflets (2a, 2b) à ressort pneumatique par respectivement un clapet (4a, 4b) anti-retour.

3. Dispositif de suspension pneumatique suivant la revendication 1 ou 2,
**caractérisé en ce que** une première position de l'élément (9) d'actionnement manuel induit un état de fonctionnement stationnement, l'unité (8) de commande manuelle reliant un conduit (10f) de réserve, relié pneumatiquement au réservoir, (11) par l'intermédiaire de l'unité (15) de soupape au au moins un robinet (5a) d'arrêt ainsi qu'à la au moins une soupape (6a) d'alimentation en air et à la au moins une soupape (7a) de purge par le conduit (10a, 10b, 10c) pneumatique respectif.

4. Dispositif de suspension pneumatique suivant la revendication 1 ou 2,
**caractérisé en ce qu'**une deuxième position de l'élément (9) d'actionnement manuel induit un état de fonctionnement marche, l'unité (8) de commande manuelle reliant le conduit (10f) de réserve par l'unité (15) de soupape à la au moins une soupape (6a) d'alimentation en air et à la au moins une soupape (7a) de purge par le conduit (10b, 10c) pneumatique respectif et purgeant le conduit (10a) pneumatique du au moins un robinet (5a) d'arrêt.

5. Dispositif de suspension pneumatique suivant la revendication 1 ou 2,
**caractérisé en ce qu'**une troisième position de l'élément (9) d'actionnement manuel induit un état de fonctionnement abaisser, l'unité (8) de commande manuelle reliant le conduit (10f) de réserve par l'unité (15) de soupape au au moins un robinet (5a) d'arrêt et à la au moins une soupape (6a) d'alimentation en air par le conduit (10a, 10b) pneumatique respectif et purgeant le conduit (10c) pneumatique de la au moins une soupape (7a) de purge.

6. Dispositif de suspension pneumatique suivant la revendication 1 ou 2,
**caractérisé en ce qu'**une quatrième position de l'élément (9) d'actionnement manuel induit un état de fonctionnement lever, l'unité (8) de commande manuelle reliant le conduit (10f) de réserve, par l'unité (15) de soupape, au au moins un robinet (5a) d'arrêt et à la au moins une soupape (7a) de purge par le conduit (10a, 10c) pneumatique respectif et purgeant le conduit (10b) pneumatique de la au moins une soupape (6a) de purge.

7. Dispositif de suspension pneumatique suivant la revendication 1,
**caractérisé en ce que** le dispositif (3) de soupape de commande a, pour un dispositif de suspension pneumatique à un circuit, le robinet (5a) d'arrêt, la soupape (6a) d'alimentation en air et au moins une soupape (7a) de purge.

8. Dispositif de suspension pneumatique suivant la revendication 1,
**caractérisé en ce que** le dispositif (3) de soupape de commande a, pour un dispositif de suspension pneumatique à deux circuits et/ou quasiment à deux circuits, deux robinet (5a, 5b) d'arrêt, deux soupapes (6a, 6b) d'alimentation en air et deux soupapes (7a, 7b) de purge.
